# FASCICULE DE BREVET EUROPEEN

(11) **EP 2 946 165 B1**
(45) Date de publication et mention de la délivrance du brevet: **07.03.2018**
(21) Numéro de dépôt: 14706876.1
(22) Date de dépôt: 14.01.2014
(51) Int. Cl.: F41H 5/22, B62D 33/06, F41H 5/26, F41H 7/02, B62D 25/04

(54) **CAISSE DE VÉHICULE BLINDÉ À MONTANTS RÉDUITS**
GEPANZERTE FAHRZEUGKAROSSERIE MIT KLEINEREN STREBEN
ARMOURED VEHICLE BODY SHELL WITH SMALLER STRUTS

(30) Priorité: 15.01.2013 FR 1300147
(43) Date de publication de la demande: 25.11.2015
(73) Titulaire: NEXTER Systems, 42328 Roanne Cedex (FR)
(72) Inventeur: JACQUEMONT, Jacky, F-18023 Bourges (FR)
(74) Mandataire: Cabinet Chaillot
(86) Numéro de dépôt international: PCT/FR2014/050069
(87) Numéro de publication internationale: WO 2014/111652

(56) Documents cités:
- EP-A2- 2 258 917
- US-A- 1 854 210
- US-A- 2 061 788
- US-A- 4 351 558

## Description

Le domaine technique de l'invention est celui des structures de caisse de véhicules blindés et de leurs ouvrants. Un tel véhicule est connu du document EP2258917 A2 Classiquement, les véhicules blindés connus tels que celui divulgué dans WO201122295 ou tels que celui représenté à la figure 1 comportent des vitrages 10 (sur les parois latérales) et 11 (pare-brise) qui, pour résister aux agressions de projectiles cinétiques, se doivent d'être de forte épaisseur (comprise entre 40 et 100mm).

Compte tenu de l'épaisseur de ces vitrages 10 et 11 et de leur poids, ceux-ci nécessitent des cadres de fixation 9 permettant de solidariser robustement les vitrages 10 et 11 sur les parois de la caisse 100 du véhicule.

Chaque cadre 9 comporte une surface d'appui 9a, entourant le cadre du vitrage 10 ou 11 et sensiblement parallèle au plan du vitrage 10 ou 11. Cette surface d'appui 9a est indispensable et sert de zone de fixation du cadre 9 équipé du vitrage 10 ou 11 avec la caisse 100 du véhicule. Ainsi, si l'on considère un pare-brise 11 de véhicule, toute la face avant du véhicule ne peut être occupée par le vitrage 11 car il faut prévoir de la place pour recevoir la surface d'appui 9a ce qui réduit le champ de vision d'un occupant 1 à l'intérieur du véhicule. Le problème est identique pour les vitrages 10 qui sont sur les parois latérales 20 de la caisse.

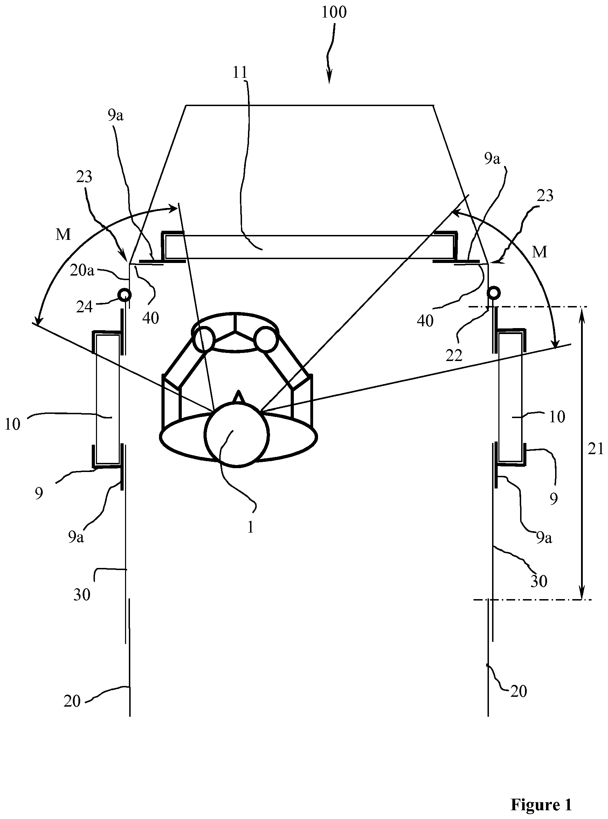

Sur la figure 1, chaque paroi latérale 20 comporte une ouverture 21 qui est ici destinée à être obturée par une porte 30 articulée sur la paroi 20 au niveau d'une charnière verticale 24 qui est fixée à la paroi latérale 20. La porte 30 comporte une surface vitrée 10 solidaire d'un cadre 9. Dans la suite de la description on désignera par montant 20a une partie de la paroi latérale 20 de la caisse qui est située entre un bord 22 de l'ouverture 21 de la paroi latérale 20 et un rebord 23 de cette paroi 20 qui est solidaire de la face avant 40 de la caisse et forme une arête de la caisse 100. Ainsi au niveau des montants 20a, comme illustré à la figure 1, un occupant 1 du véhicule verra son champ de vision externe notablement diminué d'un angle M (aussi bien du côté gauche que du côté droit) par les masques formés par le montant 20a de la paroi latérale 20 et les cadres 9 du pare-brise 11 et de la surface vitrée 10. Dans le cas où la paroi latérale ne comporte pas de porte mais uniquement une ouverture 21 vitrée, le montant 20a est toujours la partie de la paroi latérale 20 de la caisse située entre le bord 22 de l'ouverture 21 et le rebord 23 de la paroi 20 solidaire de la face avant 40 de la caisse.

Une simple réduction de la largeur des montants conduirait à une diminution de la résistance mécanique des montants donc de la protection du véhicule. De plus une simple réduction des montants ne permettrait pas forcément d'avoir suffisamment de place pour accueillir les surfaces d'appui des montants 9a.

Le brevet US2061788 divulgue un véhicule automobile civil comportant des montants de pare-brise profilés pour améliorer le champ de vision des occupants. Chaque montant pénètre dans l'habitacle et s'étend jusqu'à une extrémité arrière qui forme aussi le bord de l'ouverture obturée par la porte. Ainsi disposée la jonction entre les montants et la face avant se fait à distance du bord de l'ouverture. Cependant un tel assemblage ne permet pas de résister de manière optimale aux effets d'explosions latérales.

Le but de l'invention est d'améliorer la vision de l'occupant du véhicule en réduisant l'angle de masquage M dû au montant 20a sans pour autant dégrader les performances de protection balistique du véhicule (en particulier vis à vis des effets de souffle des engins explosifs).

Un avantage de l'invention est d'améliorer l'appui balistique d'une paroi latérale de la caisse en cas de souffle d'explosion latéral.

Un autre avantage de l'invention est d'améliorer l'accessibilité à bord du véhicule.

Ainsi, l'invention a pour objet une caisse de véhicule blindé comportant:
une face avant portant un pare-brise blindé saillant vers l'extérieur de la caisse,
au moins une paroi latérale comportant une ouverture, paroi latérale qui est solidaire de la face avant au niveau d'un montant qui est défini par une partie de la paroi latérale comprise entre un bord de l'ouverture et un rebord de la paroi latérale situé le plus vers l'extérieur en avant du véhicule, caisse de véhicule blindé caractérisée en ce que:
   - le montant s'étend au-delà de la face avant en direction de l'extérieur de la caisse,
   - au moins un bord de l'ouverture est situé à proximité de la face avant, de sorte que la jonction entre le montant et la face avant du véhicule se fasse au voisinage du bord de l'ouverture qui forme un bord arrière du montant.

Avantageusement, l'ouverture est destinée à être obturée par un ouvrant vitré.

Avantageusement, l'ouverture est destinée à être obturée par un vitrage.

Selon une caractéristique de l'invention, l'ouvrant vitré comporte une porte couvrant l'ouverture de la paroi latérale, porte comportant une partie vitrée dont au moins un des bords est situé au voisinage du bord de l'ouverture situé à proximité de la face avant.

Selon une autre caractéristique de l'invention le montant s'étend vers l'extérieur de la caisse d'une largeur L au moins égale à l'épaisseur du pare-brise.

L'invention sera mieux comprise à la lecture de la description suivante, description illustrée par les dessins en annexe, dessins dans desquels :
La figure 1 représente un schéma d'un véhicule selon l'état de la technique, en vue de dessus.
La figure 2 représente un schéma d'un véhicule selon l'invention en vue de côté sans porte latérale ni vitrage.
La figure 3 représente un schéma d'un véhicule selon l'invention en vue de côté avec une porte et un vitrage.
La figure 4 représente un schéma partiel d'un véhicule selon l'invention en vue de dessus.
La figure 5 représente un schéma d'un véhicule selon l'invention en vue de dessus.

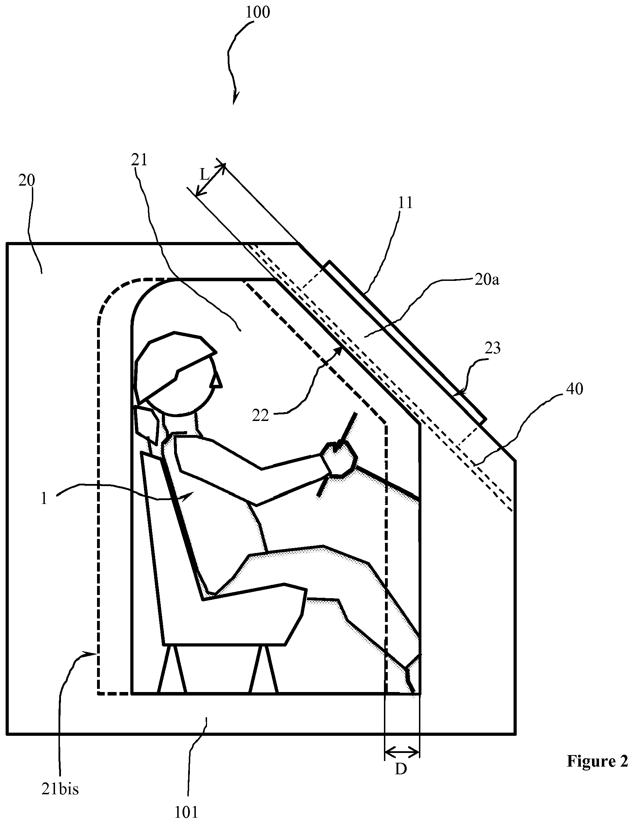

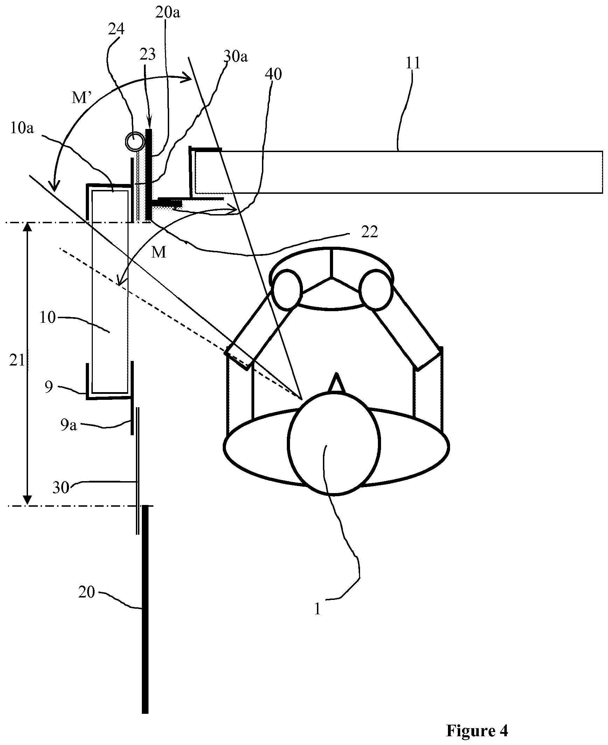

Selon la figure 2 et selon l'invention, un véhicule blindé 100 comporte une caisse 101. La face avant 40 de la caisse 101 comporte un pare-brise blindé épais 11. De part et d'autre de la face avant 40 se situent des parois latérales 20 aussi visibles à la figure 4. La paroi latérale 20 comporte une ouverture 21 destinée à permettre l'accès d'un occupant 1 à l'intérieur du véhicule 100. La paroi 20 est rendue solidaire de la face avant 40 (par exemple par soudage). La partie de la paroi latérale 20 située entre un bord 22 de l'ouverture 21 et un rebord avant 23 de la paroi latérale 20 situé le plus en avant de la caisse, définissent un montant 20a de la paroi 20.

On notera que le montant 20a s'étend au-delà de la face avant 40 en direction de l'avant de la caisse et qu'il couvre ainsi au moins partiellement l'épaisseur du pare-brise 11.

Par rapport à l'art antérieur représenté à la figure 1, cet avancement du montant 20a permet d'avancer l'ouverture 21 d'une distance D d'environ 80 mm en plaçant la face avant 40 à au plus 40mm du bord 22 de l'ouverture 21. On a représenté sur la figure 2 par des pointillés 21bis la position d'une ouverture selon l'état de la technique. L'Homme du Métier pourra aisément mettre à profit l'avancement de l'ouverture 21 pour augmenter la taille de l'ouverture 21 ce qui permettra un accès plus aisé à bord du véhicule.

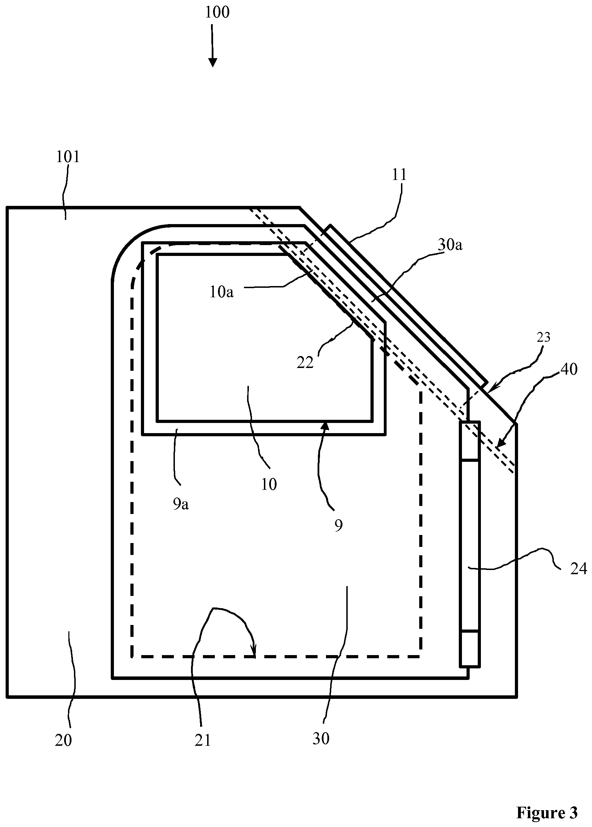

Sur la figure 3 on a représenté l'ouverture 21 obturée par un ouvrant 30 sous la forme d'une porte 30, destinée à pivoter par rapport à la paroi latérale 20 autour d'une charnière 24 d'axe vertical. La porte 30 prend appui, par le pourtour de sa face interne, sur la paroi latérale 20. Cet appui est nécessaire pour garantir une bonne résistance de la porte à d'éventuels souffles d'explosions sur les côtés du véhicule. Ainsi, la partie supérieure avant 30a de la face interne de la porte 30 prend appui sur le montant 20a. Pour les mêmes raisons d'appui l'assemblage du montant 20a avec la face avant 40 se fait en plaquant une face du montant sur la tranche latérale de la face avant 40 (tranche visible en pointillés sur la figure).

La porte 30 comporte un vitrage 10 solidaire de la porte 30 par un cadre 9 plaquant le vitrage 10 sur la porte 30 au moyen d'une surface d'appui 9a.

On notera aux figures 3 et 4 que le bord 10a du vitrage 10 est situé au voisinage du bord 22 de l'ouverture 21, le long du montant 20a. La position dite avancée des montants permet cette position avancée du vitrage 10 qui peut être positionné au plus près de la face avant 40 de la caisse 101.

Ainsi la zone vitrée 10 est avancée au maximum vers l'avant du véhicule 100. Ce qui a pour effet de dégager la vue dans cette direction d'observation par rapport à un vitrage de l'état de la technique.

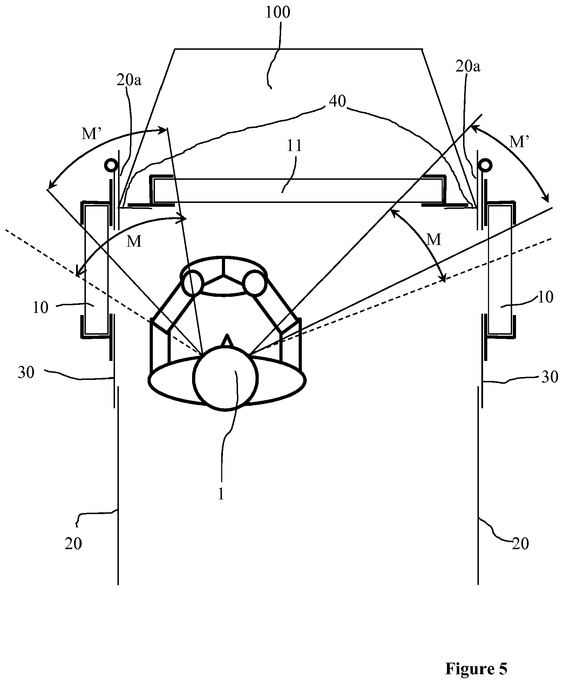

Ainsi sur les figures 4 et 5, on peut vérifier que le fait d'avoir un montant 20a avancé permet d'avancer le vitrage 10 ce qui donne un angle de masquage M' notablement réduit par rapport à l'angle de masquage M de l'état de la technique. L'angle de masquage M côté gauche est réduit d'environ 7° (soit plus de 25% de réduction du masquage) et l'angle de masquage côté droit est réduit de 4,5° (soit plus de 35% de réduction de masquage). En outre, comme visible sur la figure 4, le montant 20a est sensiblement plan et assemblé sensiblement perpendiculairement à la face avant 40.

La jonction entre le montant 20a et la face avant 40 du véhicule se fait avec l'invention au voisinage du bord arrière 22 du montant 20a et non au voisinage du rebord avant 23, soit à une distance du bord 22 qui est inférieure à 50% de la largeur du montant 20a. Ceci réduit le porte à faux entre ce bord arrière 22 et la face avant 40 comparativement à l'état de la technique tel qu'à la figure 1 où la face avant 40 est solidarisée au montant 20a au niveau du rebord avant 23 du montant 20a.

Cette réduction du porte à faux permet de limiter les efforts sur le montant dus au souffle provoqué par une explosion latéralement au véhicule.

Il est évident pour l'homme du métier que l'invention peut être appliquée à un véhicule ne comportant pas de porte mais seulement un vitrage latéral. Dans ce cas le montant 20a qui s'étend vers l'avant du véhicule permet de recevoir la surface d'appui 9a du cadre 9 du vitrage latéral, ce qui permet d'avancer la partie transparente du vitrage latéral au plus près de la face avant 40 et améliore donc la visibilité.

Il est aussi évident pour l'homme du métier que cette solution de montant selon l'invention peut être employée pour d'autres parties de la caisse du véhicule par exemple pour des vitrages placés vers l'arrière de la caisse. Dans ce cas on considèrera dans la description précédente que la face dite avant est une face arrière du véhicule.

## Revendications

1. Caisse (101) de véhicule blindé (101) comportant:
une face avant (40) portant un pare-brise (11) blindé saillant vers l'extérieur de la caisse (101),
au moins une paroi latérale (20) comportant une ouverture (21), paroi latérale qui est solidaire de la face avant (40) au niveau d'un montant (20a) qui est défini par une partie de la paroi latérale comprise entre un bord (22) de l'ouverture (21) et un rebord (23) de la paroi latérale (20) situé le plus vers l'extérieur en avant du véhicule, caisse de véhicule blindé ***caractérisée en ce que:***
- le montant (20) s'étend au-delà de la face avant (40) en direction de l'extérieur de la caisse (101),
- au moins un bord (22) de l'ouverture (21) est situé à proximité de la face avant (40), de sorte que la jonction entre le montant (20a) et la face avant (40) du véhicule se fasse au voisinage du bord (22) de l'ouverture qui forme un bord arrière (22) du montant (20a).

2. Caisse de véhicule blindé (101) selon la revendication 1, **caractérisée en ce que** l'ouverture (21) est destinée à être obturée par un ouvrant vitré (30).

3. Caisse de véhicule blindé (101) selon la revendication 1, **caractérisée en ce que** l'ouverture (21) est destinée à être obturée par un vitrage (10).

4. Caisse de véhicule blindé (101) selon la revendication 2, **caractérisée en ce que** l'ouvrant vitré (30) comporte une porte (30) couvrant l'ouverture (21) de la paroi latérale (20), porte (21) comportant une partie vitrée (10) dont au moins un des bords (10a) est situé au voisinage du bord (22) de l'ouverture (21) situé à proximité de la face avant (40).

5. Caisse de véhicule blindé (101) selon une des revendications 1 à 4, **caractérisée en ce que** le montant (20a) s'étend vers l'extérieur de la caisse d'une largeur L au moins égale à l'épaisseur du pare-brise (11).

## Patentansprüche

1. Gepanzerte Fahrzeugkarosserie (101) mit:
einer Vorderseite (40), die eine gepanzerte Windschutzscheibe (11) trägt, die über die Karosserie (101) vorsteht,
mindestens einer Seitenwand (20) mit einer Öffnung (21), wobei die Seitenwand mit der Vorderseite (40) auf Höhe einer Strebe (20a) verbunden ist, die durch einen Teil der Seitenwand zwischen einem Rand (22) der Öffnung (21) und einem Rand (23) der Seitenwand (20) definiert ist, der ganz nach außen hin vor dem Fahrzeug liegt, wobei die gepanzerte Fahrzeugkarosserie **dadurch gekennzeichnet ist, dass**:
- die Strebe (20) sich über die Vorderseite (40) hinaus in Richtung auf das Äußere der Karosserie (101) erstreckt,
- mindestens ein Rand (22) der Öffnung (21) in der Nähe der Vorderseite (40) liegt, so dass die Verbindung zwischen der Strebe (20a) und der Vorderseite (40) des Fahrzeugs in der Nähe desjenigen Randes (22) der Öffnung erfolgt, der einen hinteren Rand (22) der Strebe (20a) bildet.

2. Gepanzerte Fahrzeugkarosserie (101) nach Anspruch 1, **dadurch gekennzeichnet, dass** die Öffnung (21) dazu bestimmt ist, von einem verglasten Öffnungselement (30) verschlossen zu werden.

3. Gepanzerte Fahrzeugkarosserie (101) nach Anspruch 1, **dadurch gekennzeichnet, dass** die Öffnung (21) dazu bestimmt ist, durch eine Verglasung (10) verschlossen zu werden.

4. Gepanzerte Fahrzeugkarosserie (101) nach Anspruch 2, **dadurch gekennzeichnet, dass** die verglaste Öffnung (30) eine Tür (30) umfasst, die die Öffnung (21) der Seitenwand (20) bedeckt, wobei die Tür (21) ein Glasteil (10) umfasst, von dem mindestens einer der Ränder (10a) in der Nähe desjenigen Randes (22) der Öffnung (21) liegt, der in der Nähe der Vorderseite (40) gelegen ist.

5. Gepanzerte Fahrzeugkarosserie (101) nach einem der Ansprüche 1 bis 4, **dadurch gekennzeichnet, dass** die Strebe (20a) sich zum Äußeren der Karosserie hin erstreckt, mit einer Breite L, die mindestens gleich der Dicke der Windschutzscheibe (11) ist.

## Claims

1. A body shell (101) of an armoured vehicle (101) comprising :
a front face (40) carrying an armoured windscreen (11) projecting towards the outside of the body shell (101),
at least one side wall (20) comprising an opening (21), the side wall being integral with the front face (40) at a strut (20a) which is defined by a part of the side wall comprised between an edge (22) of the opening (21) and a rim (23) of the side wall (20) situated furthest outwards at the front of the vehicle, the armoured vehicle body shell being **characterised in that**:
- the strut (20a) extends beyond the front face (40) towards the outside of the body shell (101),
- at least one edge (22) of the opening (21) is situated near the front face (40), so that the junction between the strut (20a) and the front face (40) of the vehicle is at the vicinity of the edge (22) of the opening which forms a rear edge (22) of the strut (20a).

2. The armoured vehicle body shell (101) according to claim 1, **characterised in that** the opening (21) is intended to be closed by a glazed sash (30).

3. The armoured vehicle body shell (101) according to claim 1, **characterised in that** the opening (21) is intended to be closed by a glazing (10).

4. The armoured vehicle body shell (101) according to claim 2, **characterised in that** the glazed sash (30) comprises a door (30) covering the opening (21) of the side wall (20), the door (21) comprising a glazed part (10) at least one of the edges (10a) of which is situated at the vicinity of the edge (22) of the opening (21) situated near the front face (40).

5. The armoured vehicle body shell (101) according to one of claims 1 to 4, **characterised in that** the strut (20a) extends towards the outside of the body shell with a width L at least equal to the thickness of the windscreen (11).
